# EUROPÄISCHE PATENTSCHRIFT

(11) **EP 2 746 327 B1**
(45) Veröffentlichungstag und Bekanntmachung des Hinweises auf die Patenterteilung: **26.04.2017**
(21) Anmeldenummer: 12198072.6
(22) Anmeldetag: 19.12.2012
(51) Int. Cl.: C08K 5/098, C08L 23/02, C08L 9/00, C08J 5/10, C08L 21/00

(54) **Kautschukmischung zur Ummantelung von Festigkeitsträgern**
Rubber mixture for the cladding of rigid supports
Mélange de caoutchouc destiné à envelopper des supports de résistance

(43) Veröffentlichungstag der Anmeldung: 25.06.2014
(73) Patentinhaber: Continental Reifen Deutschland GmbH, 30165 Hannover (DE)
(72) Erfinder: Kramer, Thomas, 32049 Herford (DE); De Risi, Francesca, 30161 Hannover (DE); Lacko, Michal, 02001 Puchov (SK)

(56) Entgegenhaltungen:
- EP-A1- 0 037 942
- JP-A- S59 223 737
- US-A- 4 572 263
- DATABASE WPI Week 199920 Thomson Scientific, London, GB; AN 1999-232727 XP002695408, -& JP H11 60820 A (JAPAN ENERGY CORP) 5. März 1999 (1999-03-05)

## Beschreibung

Die Erfindung betrifft eine Kautschukmischung zur Ummantelung eines oder mehrerer Festigkeitsträger. Des Weiteren betrifft die Erfindung einen Festigkeitsträger, insbesondere für Fahrzeugluftreifen, Gurte, Riemen und Schläuche, welcher mit wenigstens einer Kautschukmischung ummantelt ist.

Festigkeitsträger zur Verstärkung verschiedener elastomerer Erzeugnisse sind hinreichend bekannt. So ist beispielsweise für Fahrzeugluftreifen bekannt, eine Gürtelbandage zu verwenden, die ein- oder mehrlagig ausgebildet ist, die Gürtelränder abdeckt und parallel und im Wesentlichen in Umfangsrichtung verlaufende Festigkeitsträger in Form von im Gummi eingebetteten Corden enthält. Diese Gürtelbandage dient dazu, insbesondere im Hochgeschwindigkeitseinsatz, eine Erhebung des Reifens durch die im Fahrbetrieb auftretenden Fliehkräfte zu verhindern. In weiteren elastomeren Erzeugnissen, wie beispielsweise Kraftübertragungsriemen oder auch Schläuchen dienen Festigkeitsträger, insbesondere in Form von Textilauflagen oder textilen Zwischenschichten aus Geweben, Gewirken oder Gestricken, unter anderem dazu, die Lebensdauer dieser Erzeugnisse zu verbessern oder erst zu ermöglichen.

Relevant hierbei ist die Haftung der Festigkeitsträger mit den jeweils in direktem Kontakt stehenden Kautschukmischungen. Zur Haftungsverbesserung werden die Festigkeitsträger entweder mit verschiedenen Haftmitteln, wie beispielsweise Resorcinformaldehydlatex (RFL) oder definierten Haftmischungen vorbehandelt.

Im Fall der Haftung von Kautschukmischungen an Stahl als Festigkeitsträger ist es besonders vorteilhaft, wenn eine Korrosionsschutzschicht auf dem Stahl vorhanden ist, die gleichzeitig eine Anbindung an die Kautschukmatrix ermöglicht. Diese Schicht kann aus Zink oder Messing aufgebaut sein. Durch das Dendritenwachstum der sich bildenden Metallsulfide erfolgt eine mechanische Verzahnung vom Festigkeitsträger in die umgebende Kautschukmischung.

Üblicherweise werden in derartigen Haftmischungen zusätzlich Cobaltverbindungen als Haftvermittler verwendet. Durch die Anwesenheit von Cobalt wird vor allem die unter Feuchte gealterte Haftung verbessert.

Die Alterungsbeständigkeit des Haftsystems ist für die strukturelle Stabilität von Fahrzeugluftreifen von besonderer Bedeutung.

In Kautschukmischungen, die auf Basis eines unpolaren Füllstoffs aufgebaut sind, ist der Einfluss von zusätzlichen Haftvermittlern auf die Haftung nach Alterung bekannt. So ist beispielsweise in der US 5126385 der Einsatz von Chlorpyrimidin- und Chlortriazin-Derivaten als Haftvermittler in Kombination mit einem Resorcin-Donor in rußhaltigen Naturkautschukmischungen offenbart. Des Weiteren wird, wie in der US 5126385 und der US 5217807 beschrieben, Tetrachlor-1,4-benzochinon als Haftvermittler in Kautschukmischungen mit Naturkautschuk als Hauptpolymerkomponente und Ruß als einzigem Füllstoff eingesetzt.

Chlor hat allerdings den Nachteil, dass es die Stahlcordkorrosion fördert. Daher ist bei metallischen Festigkeitsträgern, welche von einer chlorhaltigen Kautschukmischung ummantelt sind, eine verstärkte Rostbildung zu erwarten. Hierdurch wird die Haltbarkeit von Fahrzeugluftreifen, die diese Festigkeitsträger enthalten, verringert.

Aufgabe der vorliegenden Erfindung ist es nun, eine Kautschukmischung zur Ummantelung eines oder mehrerer Festigkeitsträger bereitzustellen, die sich durch eine im Vergleich zum Stand der Technik bessere oder zumindest gleichbleibende Haftung an einen Festigkeitsträger vor und nach der Alterung auszeichnet. Dabei soll insbesondere die Haftung an Stahl nach der Alterung gegenüber dem Stand der Technik weiter verbessert werden, ohne dass die Kautschukmischung im Zielkonflikt mit anderen Eigenschaften, wie Wärmeaufbau und Haltbarkeitsindikatoren, verschlechtert wird.

Gelöst wird die Aufgabe dadurch, dass die Kautschukmischung zur Ummantelung eines oder mehrerer Festigkeitsträger wenigstens folgende Bestandteile enthält:
- wenigstens einen Dienkautschuk und
- 0,1 bis 3 phr wenigstens einer Cobaltverbindung als einen ersten Haftvermittler und
- 0,1 bis 5 phr wenigstens eines weiteren Haftvermittlers mit der Summenformel

   M(CₙH₂ₙ₋ₓO₂)_{y},

   wobei M ein einwertiges Natrium-Kation oder zweiwertiges Magnesium-Kation oder dreiwertiges Eisen-Kation ist und wobei x eine ganze Zahl zwischen 0 und 2 ist und wobei y eine ganze Zahl zwischen 1 und 3 ist und wobei n eine ganze Zahl zwischen 10 und 37 ist.

Es hat sich überraschenderweise herausgestellt, dass durch den Zusatz wenigstens eines weiteren Haftvermittlers aus der genannten Gruppe in der erfindungsgemäßen Kautschukmischung die Haftung der Kautschukmischung an Stahl nach dem Altern verbessert wird.

Fahrzeugluftreifen, die einen erfindungsgemäßen Festigkeitsträger beinhalten, der mit einer erfindungsgemäßen Kautschukmischung ummantelt ist, weisen somit eine deutlich längere Lebensdauer auf.

Der Begriff "ummantelt" ist im Rahmen der vorliegenden Erfindung als "beschichtet" oder "gummiert" zu verstehen, wobei die dem Fachmann bekannten Mengen zur Beschichtung von Festigkeitsträgern und die Schichtdicken hierbei bekannt sind.

Erfindungsgemäß enthält die Kautschukmischung wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Halobutylkautschuk und/oder Polynorbornen und/oder Isopren-Isobutylen-Copolymer und/oder Ethylen-Propylen-Dien-Kautschuk und/oder Nitril-Kautschuk und/oder Acrylat-Kautschuk und/oder Fluor-Kautschuk und/oder Chloropren-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierter Acrylnitrilbutadienkautschuk und/oder Isopren-Butadien-Copolymer und/oder hydriertem Styrol-Butadien-Kautschuk und/oder Flüssigkautschuken.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Besonders bevorzugt ist der Dienkautschuk natürliches Polyisopren und/oder synthetisches Polyisopren. Gute Hafteigenschaften werden insbesondere bei der Verwendung wenigstens eines natürlichen Polyisoprens erzielt werden. Besonders gute Eigenschaften im Hinblick auf die Haftung ergeben sich, wenn die Kautschukmischung wenigstens 50 phr, bevorzugt 70 bis 100 phr, besonders bevorzugt 80 bis 100 phr, wenigstens eines natürlichen und/oder synthetischen Polyisoprens enthält. Sehr gute Haftergebnisse in Kombination mit weiteren guten physikalischen Eigenschaften werden auch erzielt, wenn die Kautschukmischung 100 phr natürliches Polyisopren enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Enthält die Kautschukmischung als Dienkautschuk Butadien-Kautschuk (BR, auch Polybutadien), kann es sich dabei sowohl um cis-1,4-Polybutadien als auch um trans-1,4-Polybutadien handeln. Bevorzugt ist die Verwendung von 1,4-Polybutadien mit einem cis-1,4-Polybutadien-Anteil größer 90 Gew.-%, welches z. B. durch Lösungspolymerisation in Anwesenheit von Katalysatoren vom Typ der seltenen Erden hergestellt werden kann. Ganz besonders bevorzugt ist die Verwendung von 1,4-Polybutadien mit einem cis-1,4-Polybutadien-Anteil größer 95 Gew.-%.

Bei dem Styrol-Butadien-Kautschuk kann es sich um lösungspolymerisiertes Styrol-Butadien-Copolymer (SSBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die SSBR können auch gekoppelt und/oder endgruppenmodifiziert und/oder entlang der Kohlenstoffkette modifiziert (engl. backbone modified) sein. Im Rahmen der vorliegenden Erfindung werden die Begriffe modifiziert und funktionalisiert synonym verwendet.

Bei der Modifizierung kann es sich um die folgenden Gruppen und Funktionalisierungen handeln: Hydroxy-Gruppen und/oder Ethoxy-Gruppen und/oder Epoxy-Gruppen und/oder Siloxan-Gruppen und/oder Amino-Gruppen und/oder Aminosiloxan und/oder CarboxylGruppen und/oder Phthalocyanin-Gruppen und/oder Alkoxysily-Gruppen und/oder Isocyanat-Gruppen. Dabei ist es denkbar, dass eine oder mehrere dieser Gruppen über eine gemeinsame Alkyl-Gruppe miteinander verknüpft sind.

Es können aber auch emulsionspolymerisiertes Styrol-Butadien-Copolymer (ESBR) sowie Mischungen aus ESBR und SSBR eingesetzt werden. Der Styrolgehalt des ESBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die Kautschukmischung enthält als ersten Haftvermittler wenigstens eine Cobaltverbindung, welche bevorzugt ein Cobaltsalz ist. Vorteilhaft für die Hafteigenschaften ist die Verwendung von Cobaltstearaten und/oder Cobaltboraten und/oder Cobaltnaphthenaten.

Überraschenderweise hat sich gezeigt, dass in der erfindungsgemäßen Kautschukmischung die Haftergebnisse weiter verbessert werden können, und zwar ohne eine Erhöhung der Menge an Cobaltverbindungen. Die erfindungsgemäße Kautschukmischung zeichnet sich also durch eine verbesserte Haftung, insbesondere nach der Alterung, bei einer vergleichsweise geringen Menge an Cobalt aus. Größere Mengen von Cobaltverbindungen, wie sie in der industriellen Produktion der Haftmischungen oft zu finden sind, sind für viele Lebewesen giftig und führen zu Haut-, Lungen-, Magenerkrankungen, Leber-, Herz-, Nierenschäden und Krebsgeschwüren. Des Weiteren reduzieren Cobaltverbindungen in einer Kautschukmischung insbesondere die Ermüdungsbeständigkeit der Mischung.

Die erfindungsgemäße Kautschukmischung enthält 0,1 bis 5 phr wenigstens eines weiteren Haftvermittlers mit der Summenformel

M(CₙH₂ₙ₋ₓO₂)_{y}

wobei M ein einwertiges Natrium-Kation oder zweiwertiges Magnesium-Kation oder dreiwertiges Eisen-Kation ist und wobei x eine ganze Zahl zwischen 0 und 2 ist und wobei y eine ganze Zahl zwischen 1 und 3 ist und wobei n eine ganze Zahl zwischen 10 und 37 Grenzen ist.

Bei dem weiteren Haftvermittler handelt es sich also um das Metallsalz einer Carbonsäure mit 10 bis 37 Kohlenstoffatomen.

In einer bevorzugten Ausführungsform der Erfindung nimmt x den Wert 0 an, sodass es sich bei dem wenigstens einen weiteren Haftvermittler um das Salz einer Alkansäure handelt. Hierbei sind alle C-C-Bindungen, also alle Bindungen zwischen zwei Kohlenstoffatomen, gesättigt.

In einer weiteren bevorzugten Ausführungsform der Erfindung nimmt x den Wert 2 an, sodass es sich bei dem wenigstens einen weiteren Haftvermittler um das Salz einer Alkensäure handelt. Hierbei enthält die Kohlenstoffkette eine C=C-Doppelbindung und ist damit ungesättigt.

Besonders bevorzugt ist n gleich 16 oder 17 oder 18, ganz besonders bevorzugt ist n gleich 18.

In einer besonders bevorzugten Ausführungsform der Erfindung ist n gleich 18 und x gleich 0, so dass der wenigstens eine weitere Haftvermittler ein Metallsalz von Stearinsäure ist.

M ist ein einwertiges oder zweiwertiges oder dreiwertiges Kation aus der Gruppe bestehend aus Natrium und Magnesium und und Eisen. Unter einwertig ist zu verstehen, dass das Metall-Kation in der chemischen Verbindung mit der oben aufgeführten Summenformel die formale Ladung +1 trägt. Zweiwertig und dreiwertig sind analog zu verstehen.

Hierbei ist es auch denkbar, dass bei Metallen, die als Kation verschiedene formale Ladungen annehmen können, ein Gemisch vorliegt. So kann der wenigstens eine weitere Haftvermittler beispielsweise auch ein Gemisch aus zwei Haftvermittlern sein und zwar z.B. einer Substanz mit zweiwertigen Eisen-Kationen und einer Substanz mit dreiwertigen Eisen-Kationen. Darüber hinaus ist es denkbar, dass Haftvermittler mit verschiedenen der genannten Kationen im Gemisch vorliegen.

Die Variable y nimmt entsprechend der formalen Ladung des Metall-Kations den Wert einer ganzen Zahl zwischen 1 und 3 an. Da die Carboxylat-Gruppe (COO⁻) formal eine negative Ladung trägt, ist y im Fall eines einwertigen Kations gleich 1, im Fall eines zweiwertigen Kations gleich 2 und im Fall eines dreiwertigen Kations gleich 3. M ist ein einwertiges Natrium-Kation oder ein zweiwertiges Magnesium-Kation oder ein dreiwertiges Eisen-Kation. Besonders bevorzugt ist es, wenn n gleich 18 und x gleich 0 ist und M ein einwertiges Natrium-Kation oder ein zweiwertiges Magnesium-Kation oder ein dreiwertiges Eisen-Kation ist, womit der wenigstens eine weitere Haftvermittler Natriumstearat oder Magnesiumstearat oder Eisenstearat ist. Bei der Verwendung wenigstens einer dieser Substanzen als Haftvermittler werden besonders gute Hafteigenschaften der Kautschukmischung an Stahl, insbesondere nach der Alterung, erzielt.

Auch hier ist es denkbar, dass ein Gemisch aus Natriumstearat und/oder Magnesiumstearat und/oder Eisenstearat verwendet wird.

Bevorzugt ist es, wenn die Kautschukmischung den wenigstens einen weiteren Haftvermittler in Mengen von 0,5 bis 2 phr enthält, besonders bevorzugt in Mengen von 0,5 bis 1,5 phr und ganz besonders bevorzugt in Mengen von 0,8 bis 1,2 phr.

Die erfindungsgemäße Kautschukmischung enthält bevorzugt zumindest einen Ruß als unpolaren Füllstoff.

Der Ruß wird bevorzugt in Mengen von 0,1 bis 100 phr, besonders bevorzugt in Mengen von 40 bis 100 phr, ganz besonders bevorzugt in Mengen von 40 bis 80 phr, in der erfindungsgemäßen Kautschukmischung eingesetzt. Wiederum besonders bevorzugt ist es, wenn die Kautschukmischung 57 bis 67 phr zumindest eines Rußes enthält. Hiermit werden besonders gute Mischungseigenschaften im Hinblick auf die Reißeigenschaften erzielt.

Der eingesetzte Ruß weist dabei bevorzugt eine Jodadsorptionszahl gemäß ASTM D 1510 von 30 bis 110 mg/g, besonders bevorzugt von 60 bis 110 mg/g und ganz besonders bevorzugt von 70 bis 90 mg/g, auf. Die DBP-Zahl gemäß ASTM D 2414 des eingesetzten Rußes beträgt bevorzugt 20 bis 100 ml/100g, besonders bevorzugt von 50 bis 100 ml/100g und ganz besonders bevorzugt von 60 bis 80 ml/100g.

Ein derartiger Ruß, mit dem in der erfindungsgemäßen Kautschukmischung besonders gute Eigenschaften erzielt werden, ist ein Ruß des Typs N 326 (Jodadsorptionszahl = 82 mg/g; DBP-Zahl = 72 ml/100g).

Die Kautschukmischung kann zudem einen polaren Füllstoff enthalten. Als polare Füllstoffe können alle dem Fachmann bekannten polaren Füllstoffe, wie Aluminiumhydroxid, Titandioxid, Magnesiumoxid, Kieselsäure, Silika und Schichtsilikate verwendet werden. Bevorzugt werden als polare Füllstoffe Siliziumoxid-basierte Füllstoffe, wie Silika und Kieselsäure eingesetzt. Bevorzugt wird insbesondere als polarer Füllstoff Kieselsäure verwendet. Die in der Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET, Methode nach Brunauer, Emmett, Teller) gemäß DIN ISO 9277 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Die eingesetzten Kieselsäuren weisen eine Stickstoff-Oberfläche von größer oder gleich 100 m²/g auf, bevorzugt zwischen 100 und 250 m²/g, besonders bevorzugt zwischen 140 und 200 m²/g. Des Weiteren weisen die eingesetzten Kieselsäuren eine CTAB-Oberfläche zwischen 100 und 200 m²/g, bevorzugt zwischen 120 und 180 m²/g und besonders bevorzugt zwischen 140 und 180 m²/g auf.

Die Gesamtmenge an Füllstoff kann somit nur aus unpolaren Füllstoffen oder aus einer Kombination von polaren und unpolaren Füllstoffen bestehen.

Zur Verbesserung der Verarbeitbarkeit und zur Anbindung der Kieselsäure und anderer ggf. vorhandener polarer Füllstoffe an den Dienkautschuk können Kupplungsagenzien in Kautschukmischungen eingesetzt werden. Als Kupplungsagenzien können dabei alle der fachkundigen Person bekannten Kupplungsagenzien verwendet werden.

Die Kupplungsagenzien, bevorzugt Silan-Kupplungsagenzien, werden in Mengen bis zu 20 phr, bevorzugt in Mengen von 0,1 bis 15 phr, besonders bevorzugt in Mengen von 0,5 bis 10 phr eingesetzt.

Die Silan-Kupplungsagenzien können dabei auch als Gemisch mit Industrieruß zugesetzt werden, wie z. B. TESPT auf Ruß (Handelsname X50S^{®} der Firma Evonik).

Es können in der Kautschukmischung noch Mengen bis zu 60 phr, bevorzugt Mengen von 0,1 bis 50 phr, besonders bevorzugt Mengen von 0,1 bis 25 phr, wenigstens eines Weichmachers vorhanden sein. Dieser Weichmacher ist ausgewählt aus der Gruppe, bestehend aus Mineralölen und/oder synthetischen Weichmachern und/oder Fettsäuren und/oder Fettsäurederivaten und/oder Harzen und/oder Faktisse und/oder Glyceriden und/oder Terpenen und/oder Biomass-To-Liquid-Ölen (BTL-Öle) und/oder Rubber-To-Liquid-Ölen (RTL-Öle).

Für die verbesserte Haftung der Gummierungsschicht und insbesondere für die bessere Verarbeitbarkeit während der Herstellung des Endproduktes, bspw. des Reifens, ist die Verwendung von zumindest einem Harz vorteilhaft. Die Menge des zumindest einen Harzes beträgt bevorzugt 0,1 bis 5 phr, besonders bevorzugt 0,1 bis 2 phr und ganz besonders bevorzugt 0,5 bis 1,5 phr.

Bevorzugt wird zumindest ein phenolisches Harz eingesetzt.

Zudem ist es vorteilhaft, wenn die Kautschukmischung zumindest ein Mineralöl enthält. Bevorzugt enthält die Kautschukmischung 0,1 bis 10 phr zumindest eines Mineralöls, besonders bevorzugt 0,1 bis 5 phr und ganz besonders bevorzugt 1 bis 3 phr.

Bevorzugt wird in der Kautschukmischung RAE (residual aromatic extract) als Mineralöl eingesetzt.

Des Weiteren kann die Kautschukmischung Methylen-Donoren wie Hexamethoxymethylmelamin (HMMM) und/oder Hexamethylentetramin (HMT) enthalten. Dieses kann in reiner Form oder auf Kieselsäure aufgezogen zugegeben werden. Methylen-Donoren geben während der Vulkanisation reaktive Methylen-Gruppen ab.

Weiterhin kann die Kautschukmischung der Gummierungsschicht noch weitere Zusatzstoffe enthalten.

Weitere Zusatzstoffe beinhaltet im Wesentlichen das Vernetzungssystem (Vernetzer, Schwefelspender und/oder elementarer Schwefel, Beschleuniger und Verzögerer), Ozonschutzmittel, Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), Mastikationshilfsmittel, , wie z. B. 2,2'-Dibenzamidodiphenyldisulfid (DBD), Verarbeitungshilfsmittel und weitere Aktivatoren wie Zinkoxid.

Bevorzugt beträgt die Menge an Zinkoxid in der Kautschukmischung 0,1 bis 10 phr, besonders bevorzugt 4 bis 10 phr und ganz besonders bevorzugt 6 bis 8 phr. In wiederum einer ganz besonders bevorzugten Ausführungsform beträgt die Menge an Zinkoxid 6,5 bis 7,5 phr.

Der Mengenanteil der Gesamtmenge an weiteren Zusatzstoffen beträgt bis zu 150 phr, bevorzugt bis zu 100 phr und besonders bevorzugt 5 bis 50 phr.

Der Beschleuniger ist bevorzugt ausgewählt aus der Gruppe bestehend aus den Thiazolbeschleunigern und/oder den Mercaptobeschleunigern und /oder den Sulfenamidbeschleunigern und/oder den Thiocarbamatbeschleunigern und/oder den Thiurambeschleunigern und/oder den Thiophosphatbeschleunigern und/oder den Thioharnstoffbeschleunigern und/oder den Xanthogenat-Beschleunigern und/oder den Guanidin-Beschleunigern.

Besonders bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

In einer bevorzugten Ausführungsform der Erfindung enthält die Kautschukmischung DCBS als Beschleuniger. Dieser erweist sich aufgrund der vergleichsweise langsamen Reaktionskinetik besonders vorteilhaft für die Stahlcordhaftung der Kautschukmischung.

Die erfindungsgemäße Kautschukmischung wird zur Herstellung von Fahrzeugreifen, und zur Herstellung von Riemen, Gurten und Schläuchen verwendet.

Insbesondere dient die Kautschukmischung zur Herstellung wenigstens eines inneren Bauteils eines Fahrzeugreifens. Bei den Fahrzeugreifen kann es sich um alle denkbaren Reifen-Typen handeln, in denen Festigkeitsträger verwendet werden.

Der Erfindung liegt zudem die Aufgabe zugrunde, einen Festigkeitsträger zu schaffen, der mit einer Kautschukmischung ummantelt ist, wobei das Ziel in einer verbesserten Haftung der Kautschukmischung an den Festigkeitsträger liegt.

Gelöst wird diese Aufgabe durch die Bereitstellung eines Festigkeitsträgers, der mit der erfindungsgemäßen Kautschukmischung wie oben beschrieben ummantelt ist.

Für die Bestandteile der erfindungsgemäßen Kautschukmischung gelten alle bereits oben genannten Ausführungsformen.

Der erfindungsgemäße Festigkeitsträger ist bevorzugt aus wenigstens einem Stahl aufgebaut. Die erfindungsgemäße Kautschukmischung zeigt insbesondere an Stahl eine verbesserte Haftung.

Besonders bevorzugt ist es, wenn der Festigkeitsträger aus Stahl mit wenigstens einer Lage Messing und/oder Zink teilweise oder vollständig beschichtet ist.

Eine weitere Aufgabe der vorliegenden Erfindung liegt darin, einen Fahrzeugluftreifen bereitzustellen, der eine verbesserte Haltbarkeit, insbesondere nach der Alterung, aufweist. Gelöst wird diese Aufgabe dadurch, dass der Fahrzeugluftreifen in wenigstens einem Bauteil wenigstens einen Festigkeitsträger enthält, der mit der erfindungsgemäßen Kautschukmischung ummantelt ist.

Ein Fahrzeugluftreifen, der in wenigstens einem Bauteil wenigstens einen Festigkeitsträger enthält, der mit der erfindungsgemäßen Kautschukmischung ummantelt ist, weist eine verbesserte Haltbarkeit auf, da die Kautschukmischung eine verbesserte Haftung nach der Alterung bei sonst gleichen physikalischen Eigenschaften an Festigkeitsträger zeigt.

Die erfindungsgemäße Kautschukmischung ist aber auch für die Ummantelung von Gurten, Riemen und Schläuchen geeignet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt, mit der der Festigkeitsträger teilweise oder vollständig ummantelt wird. Dies geschieht durch kalandrieren der Kautschukmischung, bei der aus der Kautschukmischung dünne Platten hergestellt werden, welche oben und unten auf den Festigkeitsträger gebracht werden. Dabei erfolgt die Penetration der Kautschukmischung an und in die Festigkeitsträger. Nach Zuschnitt werden diese mit der Kautschukmischung versehenen Festigkeitsträger wie der fachkundigen Person bekannt zum Herstellen der benötigten Endprodukte weiterverwendet.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei die erfindungsgemäßen Beispiele, während es sich bei der mit "V" gekennzeichneten Mischung um die Vergleichsmischung handelt.

Im oberen Teil der Tabelle sind dabei die Mischungszusammensetzungen dargestellt, während im unteren Teil der Tabelle die dazugehörigen Haftungseigenschaften illustriert werden.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt. Die Alterungsbedingungen gehen aus der Tabelle 1 hervor.
- Haftung (Rubber Coverage bei Raumtemperatur RT) und Auszugskraft (Pullout Force) gemäß ASTM D2229-10
- Mooney-Viskosität gemäß ASTM D1646
- Shore-A-Härte bei Raumtemperatur (RT) gemäß DIN ISO 7619-1
- Rückprallelastizität bei RT gemäß DIN 53 512
- Zugfestigkeit, Reißdehnung und Spannungswert bei 200% statischer Dehnung (Modul 200) bei Raumtemperatur gemäß DIN 53 504

**Tabelle 1**

| **Bestandteile** | **Einheit** | **V1** | **E1** | **E2** | **E3** |
|---|---|---|---|---|---|
| Polyisopren | phr | 100 | 100 | 100 | 100 |
| Ruß ^{a)} | phr | 62 | 62 | 62 | 62 |
| Phenol. Harz | phr | 1 | 1 | 1 | 1 |
| Resorcin ^{b)} | phr | 1,85 | 1,85 | 1,85 | 1,85 |
| Weichmacher | phr | 2 | 2 | 2 | 2 |
| Alterungsschutzmittel | phr | 3 | 3 | 3 | 3 |
| Zinkoxid | phr | 7 | 7 | 7 | 7 |
| HMT/Kieselsäure ^{c)} | phr | 2,5 | 2,5 | 2,5 | 2,5 |
| Beschleuniger ^{d)} | phr | 0,75 | 0,75 | 0,75 | 0,75 |
| Schwefel, ölverstreckt ^{e)} | phr | 6,75 | 6,75 | 6,75 | 6,75 |
| Cobaltstearat | phr | 1,3 | 1,3 | 1,3 | 1,3 |
| Haftvermittler A | phr | - | 1 | - | - |
| Haftvermittler B | phr | - | - | 1 | - |
| Haftvermittler C | phr | - | - | - | 1 |
| **Adhäsion an Stahl vor Alterung** | | | | | |
| Pullout Force | N | 327 | 310 | 312 | 307 |
| Coverage bei RT | % | 89 | 88 | 91 | 92 |
| **Adhäsion an Stahl nach Alterung (5 Tage bei 105 °C, Dampf)** | | | | | |
| Pullout Force | N | 83 | 88 | 103 | 99 |
| Coverage bei RT | % | 65 | 66 | 65 | 65 |
| **Adhäsion an Stahl nach Alterung (14 Tage bei 70 °C, Feuchtigkeit)** | | | | | |
| Pullout Force | N | 91 | 123 | 108 | 109 |
| Coverage bei RT | % | 65 | 66 | 66 | 66 |
| **Adhäsion an Stahl nach Alterung (2 Tage bei 70 °C, Sauerstoff)** | | | | | |
| Pullout Force | N | 92 | 104 | 104 | 100 |
| Coverage bei RT | % | 69 | 89 | 83 | 88 |
| **Physikalische Eigenschaften** | | | | | |
| Mooney-Viskosität | Mooney-Einheiten | 87 | 84 | 86 | 79 |
| Rückprallelast. b. RT | % | 45 | 47 | 45 | 46 |
| Shore-Härte b. RT | Shore-A | 77 | 78 | 78 | 77 |
| Zugfestigkeit | MPa | 19 | 19 | 18 | 18 |
| Reißdehnung | % | 307 | 287 | 294 | 296 |
| Modul 200 | MPa | 13 | 14 | 13 | 13 |

| | | | | | |
|---|---|---|---|---|---|
| ^{a)} Rußtyp:N326 ^{b)} Resorcin: Reinheitsgrad technisch ^{c)} HMT/Kieselsäure: Hexamethylentetramin auf Kieselsäure aufgezogen; Methenalink^{®}, Fa. Ineos Paraform GmbH ^{d)} Sulfenamid-Beschleuniger DCBS (Benzothiazyl-2-dicyclohexylsulfenamid) Haftvermittler A: Natriumstearat, Fa. Lambda Life Haftvermittler B: Magnesiumstearat, Reinheitsgrad technisch, Fa. Peter Greven Fett-Chemie GmbH & Co.KG Haftvermittler C: Eisenstearat, Handelsname, Fa. Shepherd ^{e)} Schwefel ölverstreckt, 33,3 Gew.-% Öl | | | | | |

Wie aus Tabelle 1 ersichtlich, zeigen die erfindungsgemäßen Kautschukmischungen E1, E2 und E3 überraschend eine bessere Haftung nach der Alterung unter verschiedenen Bedingungen als die Vergleichsmischung V1. Hierdurch kann in einer Kautschukmischung mit einer Cobaltverbindung als Haftvermittler eine weitere Verbesserung der Haftung nach der Alterung erzielt werden, ohne dass eine höhere Menge an Cobaltverbindung(en) nötig ist.

## Patentansprüche

1. Kautschukmischung zur Ummantelung eines oder mehrerer Festigkeitsträger(s), **dadurch gekennzeichnet, dass** sie wenigstens folgende Bestandteile enthält:
- wenigstens einen Dienkautschuk und
- 0,1 bis 3 phr wenigstens einer Cobaltverbindung als einen ersten Haftvermittler und
- 0,1 bis 5 phr wenigstens eines weiteren Haftvermittlers mit der Summenformel
M(CₙH₂ₙ₋ₓO₂)_{y},
wobei M ein einwertiges Natrium-Kation oder zweiwertiges Magnesium-Kation oder dreiwertiges Eisen-Kation ist und wobei x eine ganze Zahl zwischen 0 und 2 ist und wobei y eine ganze Zahl zwischen 1 und 3 ist und wobei n eine ganze Zahl zwischen 10 und 37 ist.

2. Kautschukmischung nach Anspruch 1, **dadurch gekennzeichnet, dass** der Dienkautschuk ausgewählt ist aus der Gruppe bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

3. Kautschukmischung nach einem der Ansprüche 1 oder 2, **dadurch gekennzeichnet, dass** n gleich 16 oder 17 oder 18 ist.

4. Festigkeitsträger, **dadurch gekennzeichnet, dass** er wenigstens von einer Kautschukmischung ummantelt ist, die wenigstens folgende Bestandteile enthält:
- wenigstens einen Dienkautschuk und
- 0,1 bis 3 phr wenigstens einer Cobaltverbindung als ersten Haftvermittler und
- 0,1 bis 5 phr wenigstens eines weiteren Haftvermittlers mit der Summenformel
M(CₙH₂ₙ₋ₓO₂)_{y},
wobei M ein einwertiges Natrium-Kation oder zweiwertiges Magnesium-Kation oder dreiwertiges Eisen-Kation ist und wobei x eine ganze Zahl zwischen 0 und 2 ist und wobei y eine ganze Zahl zwischen 1 und 3 ist und wobei n eine ganze Zahl zwischen 10 und 37 ist.

5. Festigkeitsträger nach Anspruch 4, **dadurch gekennzeichnet, dass** er aus wenigstens einem Stahl aufgebaut ist.

6. Festigkeitsträger nach Anspruch 5, **dadurch gekennzeichnet, dass** der Festigkeitsträger mit wenigstens einer Lage Messing und/oder Zink teilweise oder vollständig beschichtet ist.

7. Fahrzeugluftreifen, **dadurch gekennzeichnet, dass** er in wenigstens einem Bauteil wenigstens einen Festigkeitsträger nach einem der Ansprüche 4 bis 6 enthält.

8. Verwendung wenigstens einer Kautschukmischung nach einem der Ansprüche 1 bis 3 zur Ummantelung eines oder mehrerer Festigkeitsträger.

9. Verwendung wenigstens eines Festigkeitsträgers nach einem der Ansprüche 4 bis 6 zur Verbesserung der Haltbarkeit nach Alterung von Fahrzeugluftreifen.

## Claims

1. Rubber mixture for the sheathing of one or more reinforcement system(s), **characterized in that** it comprises at least the following constituents:
- at least one diene rubber and
- from 0.1 to 3 phr of at least one cobalt compound as a first adhesion promoter and
- from 0.1 to 5 phr of at least one other adhesion promoter with the molecular formula
M(CₙH₂ₙ₋ₓO₂)_{y},
where M is a monovalent sodium cation or divalent magnesium cation or trivalent iron cation and where x is an integer from 0 to 2 and where y is an integer from 1 to 3 and where n is an integer from 10 to 37.

2. Rubber mixture according to Claim 1, **characterized in that** the diene rubber is selected from the group consisting of natural polyisoprene and/or synthetic polyisoprene and/or butadiene rubber and/or solution-polymerized styrene-butadiene rubber and/or emulsion-polymerized styrene-butadiene rubber.

3. Rubber mixture according to Claim 1 or 2, **characterized in that** n is 16 or 17 or 18.

4. Reinforcement system, **characterized in that** it has at least one sheathing rubber mixture which comprises at least the following constituents:
- at least one diene rubber and
- from 0.1 to 3 phr of at least one cobalt compound as a first adhesion promoter and
- from 0.1 to 5 phr of at least one other adhesion promoter with the molecular formula
M(CₙH₂ₙ₋ₓO₂)_{y},
where M is a monovalent sodium cation or divalent magnesium cation or trivalent iron cation and where x is an integer from 0 to 2 and where y is an integer from 1 to 3 and where n is an integer from 10 to 37.

5. Reinforcement system according to Claim 4, **characterized in that** it is composed of at least one steel.

6. Reinforcement system according to Claim 5, **characterized in that** the reinforcement system has been coated to some extent or entirely with at least one layer of brass and/or zinc.

7. Pneumatic tyre, **characterized in that** it comprises, in at least one component, at least one reinforcement system according to any of Claims 4 to 6.

8. Use of at least one rubber mixture according to any of Claims 1 to 3 for the sheathing of one or more reinforcement systems.

9. Use of at least one reinforcement system according to any of Claims 4 to 6 for improved retention of integrity of pneumatic tyres after ageing.

## Revendications

1. Mélange de caoutchouc destiné à envelopper un ou plusieurs support(s) de résistance, **caractérisé en ce qu'**il contient au moins les constituants suivants:
- au moins un caoutchouc diène et
- 0,1 à 3 pce d'au moins un composé de cobalt comme premier agent d'adhérence, et
- 0,1 à 5 pce d'au moins un autre agent d'adhérence présentant la formule globale
M(CₙH₂ₙ₋ₓO₂)_{y}
dans laquelle M est un cation sodium monovalent ou un cation magnésium divalent ou un cation fer trivalent et dans laquelle x est un nombre entier entre 0 et 2 et dans laquelle y est un nombre entier entre 1 et 3 et dans laquelle n est un nombre entier entre 10 et 37.

2. Mélange de caoutchouc selon la revendication 1, **caractérisé en ce que** le caoutchouc diène est choisi dans le groupe se composant de polyisoprène naturel et/ou de polyisoprène synthétique et/ou de caoutchouc butadiène et/ou de caoutchouc styrène-butadiène polymérisé en solution et/ou de caoutchouc styrène-butadiène polymérisé en émulsion.

3. Mélange de caoutchouc selon une des revendications 1 ou 2, **caractérisé en ce que** n est égal à 16 ou 17 ou 18.

4. Support de résistance, **caractérisé en ce qu'**il est enveloppe au moins par un mélange de caoutchouc, qui contient au moins les constituants suivants:
- au moins un caoutchouc diène et
- 0,1 à 3 pce d'au moins un composé de cobalt comme premier agent d'adhérence, et
- 0,1 à 5 pce d'au moins un autre agent d'adhérence présentant la formule globale
M(CₙH₂ₙ₋ₓO₂)_{y}
dans laquelle M est un cation sodium monovalent ou un cation magnésium divalent ou un cation fer trivalent et dans laquelle x est un nombre entier entre 0 et 2 et dans laquelle y est un nombre entier entre 1 et 3 et dans laquelle n est un nombre entier entre 10 et 37.

5. Support de résistance selon la revendication 4, **caractérisé en ce qu'**il est constitué d'au moins un acier.

6. Support de résistance selon la revendication 5, **caractérisé en ce que** le support de résistance est revêtu en partie ou en totalité d'au moins une couche de laiton et/ou de zinc.

7. Pneumatique de véhicule, **caractérisé en ce qu'**il contient dans au moins un composant au moins un support de résistance selon l'une quelconque des revendications 4 à 6.

8. Utilisation d'au moins un mélange de caoutchouc selon l'une quelconque des revendications 1 à 3 pour envelopper un ou plusieurs support(s) de résistance.

9. Utilisation d'au moins un support de résistance selon l'une quelconque des revendications 4 à 6 pour améliorer la stabilité après vieillissement de pneumatiques de véhicule.
